# EUROPÄISCHE PATENTANMELDUNG

(11) **EP 0 798 883 A2**
(43) Veröffentlichungstag der Anmeldung: **01.10.1997**
(21) Anmeldenummer: 97400644.7
(22) Anmeldetag: 21.03.1997
(51) Int. Cl.: H04B 10/18

(54) **Optischer Empfänger mit einer Entzerrerschaltung für durch Polarisationsmodendispersion verursachte Störung und System mit einem solchen optischen Empfänger**

(30) Priorität: 29.03.1996 DE 19612604
(71) Anmelder: ALCATEL ALSTHOM COMPAGNIE GENERALE D'ELECTRICITE, 75008 Paris (FR)
(72) Erfinder: Bülow, Henning, 70597 Stuttgart (DE)
(74) Vertreter: Schätzle, Albin, Dipl.-Phys.

(57) **Zusammenfassung**

Es ist ein optischer Empfänger angegeben, der ein optisches Signal (S) empfangen und auswerten kann, das durch Polarisationsmodendispersion PMD gestört ist.

Der optischer Empfänger hat eine Aufteileinrichtung (1.1), die das ihr zuführbare optische Signal (S) in zwei elektrische Signalanteile (S₋, S₊) aufteilt. Der erste elektrische Signalanteil (S₋) tritt an einem ersten Ausgang (1.16) und der zweite elektrische Signalanteil (S₊) tritt an einem zweiten Ausgang (1.17) aus der Aufteileinrichtung (1.1) aus. Die elektrischen Signalanteile (S₋, S₊) werden in einer Entzerrerschaltung (1.2) verarbeitet und an einem Ausgang (1.10) ausgegeben. Eine Steuereinrichtung (1.3) steuert die Aufteileinrichtung (1.1) mit Hilfe eines von der Entzerrerschaltung (1.2) erzeugten Qualitätssignals (Q).

## Beschreibung

Die Erfindung betrifft einen optischen Empfänger für ein optisches System, in dem optische Signale durch Polarisationsmodendispersion gestört werden. Die Erfindung betrifft außerdem ein optisches System gemäß dem Oberbegriff des Anspruchs 9.

Die in Monomodefasern auftretende Polarisationsmodendispersion äußert sich in einer Zweiwegeausbreitung eines optischen Signals. Zeigt eine Faser Doppelbrechung, also unterschiedliche Ausbreitungsbedingungen für die beiden othogonalen Polarisationsrichtungen (optische Hauptachsen), so kommt es zu einer Aufspaltung des Fasergrundmodus in zwei senkrecht zueinander polarisierte Moden. Entlang der beiden optischen Hauptachsen der Faser breitet sich das optische Signal unterschiedlich schnell aus; es kommt zu einem Zeitunterschied zwischen einem "schnellen" und einem "langsamen" Signalanteil.

Aus der Veröffentlichung von Takeshi Ozeki et al, "Polarization-mode-dispersion equalization experiment using a variable equalizing optical circuit controlled by a pulse-waveform-comparison algorithm", OFC '94 Technical Digest, Seiten 62 bis 64 (OFC: Optical Fiber Conference), ist bekannt, daß die Polarisationsmodendispersion PMD eine Begrenzung für die Bandbreite in optischen Übertragungssystemen darstellt. In dieser Veröffentlichung ist eine Entzerrerschaltung angegeben, durch die die Auswirkungen der PMD ausgeglichen werden können. Die angegebene Entzerrerschaltung ist eine optische Entzerrerschaltung, die vor dem eigentlichen optischen Empfänger in den Lichtweg eingefügt ist. Die optische Entzerrerschaltung hat einen TE-TM Wandler, optische Verzögerungsleitungen mit unterschiedlichen Verzögerungen für TE und TM Moden und variable optische Phasenschieber.

Durch ein solches optisches Entzerrerkonzept wird die die PMD verursachende Doppelbrechung einer Übertragungsfaser durch eine spezielle Faser (polarisationserhaltende Faser) festgelegter Länge ausgeglichen. Diese spezielle Faser hat eine zur Übertragungsfaser komplementäre Doppelbrechung. In optischen Übertragungssystemen ist jedoch die PMD zeitlich nicht konstant. In dem genannten optischen Entzerrerkonzept müßte daher die Länge der speziellen Faser variabel sein. Dies ist praktisch nur mit einem sehr hohen Aufwand möglich.

Der Erfindung liegt die Aufgabe zugrunde, ein anderes Entzerrerkonzept anzugeben. Ein die Aufgabe lösendes Entzerrerkonzept findet in einem optischen Empfänger Anwendung; ein solcher optischer Empfänger ist Gegenstand des Anspruchs 1. Der Erfindung liegt außerdem die Aufgabe zugrunde, ein optisches System anzugeben; das optische System ist Gegenstand des Anspruchs 9.

Vorteilhafte Ausgestaltungen der Erfindung sind in den Unteransprüchen angegeben.

Die Erfindung wird im folgenden beispielhaft anhand von Zeichnungen näher erläutert. Es zeigen:
- Fig. 1: ein erstes Ausführungsbeispiel eines optischen Empfängers,
- Fig. 2: ein Ausführungsbeispiel einer im optischen Empfänger vorhandenen Entzerrerschaltung,
- Fig. 3: einen in der Entzerrerschaltung vorhandenen Mehrstufenentscheider,
- Fig. 4: ein weiteres Ausführungsbeispiel einer Entzerrerschaltung,
- Fig. 5: ein zweites Ausführungsbeispiel eines optischen Empfängers und
- Fig. 6: ein Ausführungsbeispiel einer Aufteileinrichtung.

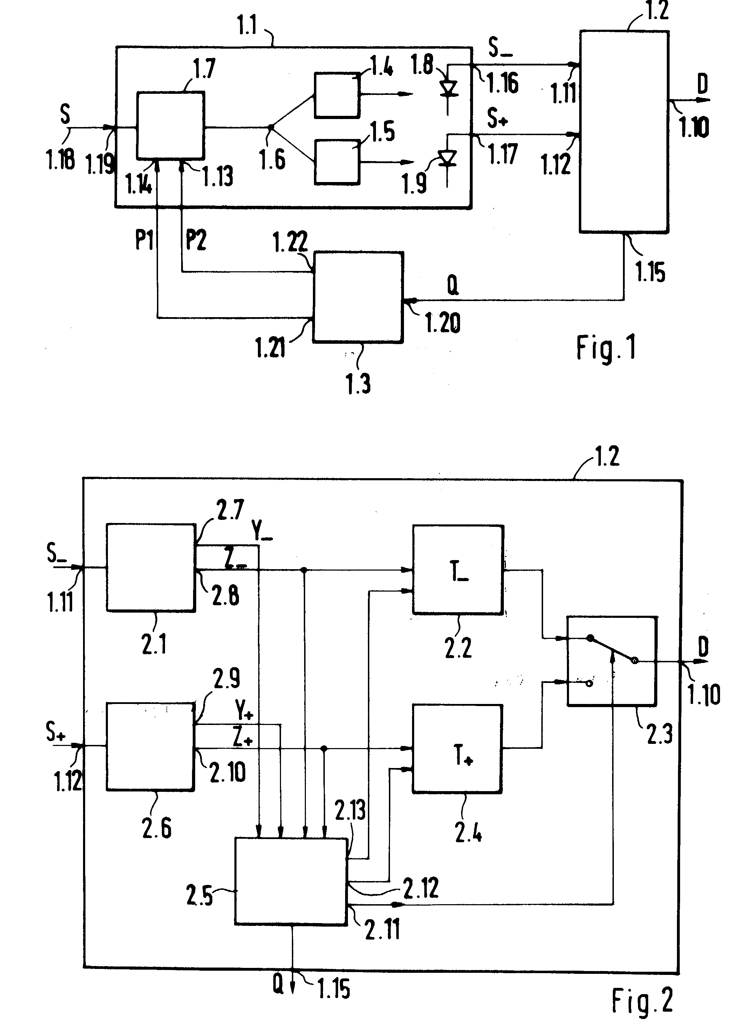

In Fig. 1 ist ein erstes Ausführungsbeispiel eines optischen Empfängers gezeigt, der Teil eines optischen Systems ist. Der optische Empfänger ist durch einen Lichtwellenleiter 1.18 an ein Lichtwellenleiternetz angeschlossen, das z. B. eine Baumoder Sternstruktur haben kann. Über dieses Lichtwellenleiternetz können dem optischen Empfänger optische Signale zugeführt werden, die ein oder mehrere optische Sender aussenden. Im folgenden wird nur der optische Empfänger mit seinen für die Erfindung wesentlichen Bestandteilen betrachtet.

Der optische Empfänger hat eine Aufteileinrichtung 1.1, eine Entzerrerschaltung 1.2 und eine Steuereinrichtung 1.3. Ein Eingang 1.19 der Aufteileinrichtung 1.1 ist mit dem Lichtwellenleiter 1.18 verbunden. Der Aufteileinrichtung 1.1 kann so ein vom Lichtwellenleiternetz kommendes optisches Signal S zugeführt werden, das sie in zwei elektrische Signalanteile S₋, S₊ aufteilt. Die elektrischen Signalanteile S₋, S₊ gehen aus dem optischen Signal S hervor, das durch Polarisationsmodendispersion PMD gestört sein kann, wegen dieser Störung sind die elektrischen Signalanteile S₋, S₊ gegeneinander zeitversetzt. Der elektrische Signalanteil S₋ tritt an einem Ausgang 1.16 aus der Aufteileinrichtung 1.1 aus, und der elektrische Signalanteil S₊ tritt an einem Ausgang 1.17 aus der Aufteileinrichtung 1.1 aus. Der Aufteileinrichtung 1.1 ist die Entzerrerschaltung 1.2 nachgeschaltet; der Ausgang 1.16 ist mit einem Eingang 1.11 der Entzerrerschaltung 1.2 verbunden und der Ausgang 1.17 mit einem Eingang 1.12. Die Entzerrerschaltung 1 .2 dient zur Laufzeitentzerrung der gegeneinander zeitversetzten elektrischen Signalanteile S₋, S₊, die unterschiedliche Signalamplituden haben können. Die Entzerrerschaltung 1.2 hat einen Ausgang 1.10 für ein aus dem optischen Signal S abgeleitetes Datensignal D und einen Ausgang 1.15 für ein von ihr erzeugtes Qualitätssignal Q, durch das Rückschlüsse auf die Signalqualität des empfangenen optischen Signals S möglich sind. Das Datensignal D wird einer weiteren Signalverarbeitung zugeführt. Das Qualitätssignal Q wird einem Eingang 1.20 der Steuereinrichtung 1.3 zugeführt, die daraus Steuersignale P1, P2 für die Aufteileinrichtung 1.1 erzeugt. Die Steuersignale P1, P2 treten an Ausgängen 1.21, 1.22 aus der Steuereinrichtung 1.3 aus.

Die Aufteileinrichtung 1.1 hat einen optischen Polarisationssteller 1.7, einen optischen Teiler 1.6, zwei optische Polarisatoren 1.4, 1.5 und zwei Photodioden 1.8, 1.9. Anstelle des optischen Teilers 1.6 und der optischen Polarisatoren 1.4, 1.5 kann auch ein optischer Polarisationsteiler verwendet werden. Dem optischen Polarisationssteller 1.7 werden das optische Signal S und die (elektrischen) Steuersignale P1, P2 zugeführt. Für die Steuersignale P1, P2 hat der Polarisationssteller 1.7 zwei Eingänge 1.13, 1.14; der Eingang 1.13 ist mit dem Ausgang 1 .21 der Steuereinrichtung 1.3 verbunden und der Eingang 1.14 mit dem Ausgang 1.22. Der (elektrische ansteuerbare) optische Polarisationssteller 1.7 ist z. B. eine Anordnung von zwei nebeneinander angeordneten Platten, auf denen ein Faserstück befestigt ist. Durch Drehen der Platten kann eine durch die Steuersignale P1, P2 beeinflußbare Torsionskraft auf das Faserstück ausgeübt werden. Dadurch kann die Polarisation des optischen Signals S wunschgemäß eingestellt werden. Der optische Polarisationssteller 1 .7 kann aber auch eine Wellenleiterstruktur in einem elektrooptischen Kristall (Lithiumniobat) sein, dessen Brechzahl durch ein von außen angelegtes elektrisches Feld gezielt verändert werden kann. Außerdem kann er als Flüssigkristall-Element ausgeführt sein, das ebenfalls durch ein elektrisches Feld steuerbar ist. Das beeinflußte optische Signal S tritt aus dem optischen Polarisationssteller 1.7 aus und wird durch den optischen Teiler 1.6 auf zwei Pfade aufgeteilt. In einem Pfad ist der optische Polarisator 1.4 vorhanden, der nur den TE Modus durchläßt, im anderen Pfad ist der optische Polarisator 1.5 vorhanden, der nur den TM Modus durchläßt. Das von den optischen Polarisatoren 1.4, 1.5 durchgelassene optische Signal S trifft jeweils auf eine der Photodioden 1.8, 1.9. Die Photodiode 1.8 erzeugt den elektrischen Signalanteil S₋ und die Photodiode 1.9 den elektrischen Signalanteil S₊.

Aus der vorhergehenden Beschreibung wird deutlich, daß im optischen Teil des optischen Empfängers keine Laufzeitbeeinflussung erfolgt; im optischen Teil werden lediglich die Polarisationsebenen des optischen Signals S beeinflußt. Die Laufzeitbeeinflussung, also eine Entzerrung, erfolgt erfindungsgemäß ausschließlich im elektrischen Teil des optischen Verstärkers; die dazu vorhandene Entzerrerschaltung 1.2 wird im folgenden anhand von Fig. 2 beschrieben.

Die Entzerrerschaltung 1.2 hat zwei Mehrstufenentscheider 2.1, 2.6, zwei Verzögerungseinrichtungen 2.2, 2.4, einen Schalter 2.3 und eine Regeleinrichtung 2.5. Der Mehrstufenentscheider 2.1, der zwei Ausgänge 2.7, 2.8 hat, ist mit dem Eingang 1.1 1 verbunden; ihm wird der elektrische Signalanteil S₋ zugeführt. Beide Ausgänge 2.7, 2.8 sind mit der Regeleinrichtung 2.5 verbunden, der Ausgang 2.8, an dem ein aus dem elektrischen Signalanteil S₋ hervorgehendes Signal Z₋ austritt, ist außerdem noch mit der Verzögerungseinrichtung 2.2 verbunden.

Der Mehrstufenentscheider 2.6, der zwei Ausgänge 2.9, 2.10 hat, ist mit dem Eingang 1.12 verbunden; ihm wird der elektrische Signalanteil S₊ zugeführt. Beide Ausgänge 2.9, 2.10 sind mit der Regeleinrichtung 2.5 verbunden, der Ausgang 2.10, an dem ein aus dem elektrischen Signalanteil S₊ hervorgehendes Signal Z₊ austritt, ist außerdem noch mit der Verzögerungseinrichtung 2.4 verbunden.

Aus den beiden von den Mehrstufenentscheidern 2.1, 2.6 kommenden Signalen Z₋, Z₊ leitet die Regeleinrichtung 2.5 das Qualitätssignal Q und drei Steuersignale ab. Die Mehrstufenentscheider 2.1, 2.6 stellen eine Möglichkeit dar, das zur Optimierung dienende Qualitätssignal Q abzuleiten. Alternativ dazu kann das Qualitätssignal Q auch durch eine Bestimmung der Bitfehlerrate der elektrischen Signalanteile S₋, S₊ oder mit Hilfe eines Minimierungsverfahrens der in den elektrischen Signalanteilen S₋, S₊ enthaltenen hochfrequenten Komponenten gewonnen werden. Das Qualitätssignal Q wird dem Ausgang 1.15 der Entzerrerschaltung 1.2 zugeführt. An einem mit dem Schalter 2.3 verbundenen Ausgang 2.1 1 der Regeleinrichtung 2.5 tritt das Steuersignal aus, das den Schalter 2.3 steuert. Die Regeleinrichtung 2.5 wertet die Signale aus und entscheidet, welcher der beiden elektrischen Signalanteile S₋, S₊ die beste Signalqualität hat; das entsprechende Signal Z₋, Z₊ wird, evtl. nach einer Verzögerung durch die Verzögerungseinrichtungen 2.2, 2.4, durch den Schalter 2.3 dem Ausgang 1.10 zugeführt. An einem mit der Verzögerungseinrichtung 2.2 verbundenen Ausgang 2.13 der Regeleinrichtung 2.5 tritt das Steuersignal aus, das die Zeitverzögerung der Verzögerungseinrichtung 2.2 derart steuert, sodaß bei einem Umschalten des Schalters 2.3 keine Bitfehler am Ausgang D auftreten. An einem mit der Verzögerungseinrichtung 2.4 verbundenen Ausgang 2.12 der Regeleinrichtung 2.5 tritt das Steuersignal aus, das die Zeitverzögerung der Verzögerungseinrichtung 2.4 steuert.

Da die elektrischen Signalanteile S₋, S₊, und damit auch die Signale Z₋ , Z₊, gegeneinander zeitlich versetzt sind, muß dieser Zeitunterschied durch die Verzögerungseinrichtungen 2.2, 2.4 ausgeglichen werden. Die Verzögerungen der Verzögerungseinrichtungen 2.2, 2.4 können deshalb durch die Steuersignale kontinuierlich oder stufenweise eingestellt werden.

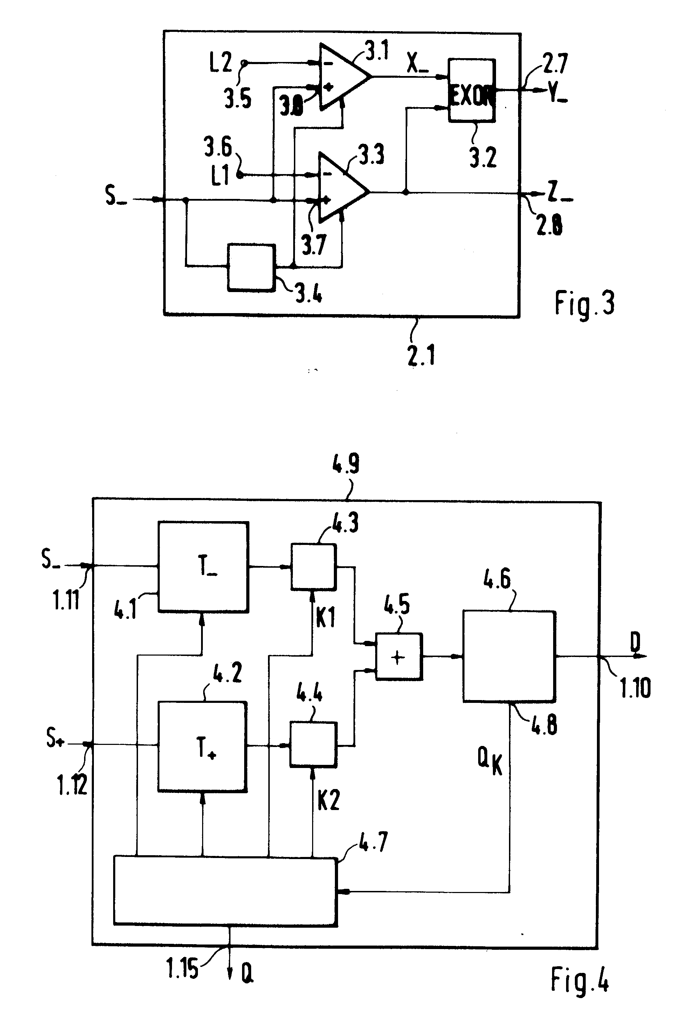

Die in der Entzerrerschaltung 1.2 enthaltenen Mehrstufenentscheider 2.1, 2.6 haben prinzipiell die gleiche Struktur, verwendete Parameter können jedoch unterschiedlich sein. In Fig. 3 ist stellvertretend für beide Mehrstufenentscheider 2.1, 2.6 der Mehrstufenentscheider 2.1 detaillierter gezeigt, der zwei Komparatoren 3.1, 3.3, eine Taktrückgewinnungseinrichtung 3.4 und ein EXOR Gatter 3.2 hat. Der elektrische Signalanteil S₋ wird der Taktrückgewinnungseinrichtung 3.4, einem Eingang 3.7 des Komparators 3.3 und einem Eingang 3.8 des Komparators 3.1 zugeführt. Einem weiteren Eingang 3.6 des Komparators 3.3 kann ein festgelegter Schwellenwert L1 zugeführt werden, und einem weiteren Eingang 3.5 des Komparators 3.1 kann ein festgelegter Schwellenwert L2 zugeführt werden. Der Schwellenwert L1 stellt die optimale Entscheiderschwelle für das Abtasten des elektrischen Signalanteils S₋ dar. Durch den von der Taktrückgewinnungseinrichtung 3.4 zurückgewonnenen Takt werden die Komparatoren 3.1, 3.3 getaktet; synchron zum Takt wird der elektrische Signalanteil S₋ abgetastet. Ist der Wert des elektrischen Signalanteils S₋ kleiner (größer) als der Schwellenwert L1, nimmt der Ausgang des Komparators 3.3 den logischen Zustand "0" ("1") an, woraus sich das Signal Z₋ ergibt. Gleichzeitig dazu wird durch den Komparator 3.1 der elektrische Signalanteil S₋ mit dem Schwellenwert L2 verglichen; am Ausgang des Komparators 3.1 tritt ein Signal X₋ aus. Das EXOR Gatter 3.2 vergleicht die Signale X₋, Z₋ und gibt ein Signal Y₋ aus, das eine von der Qualität des elektrischen Signalanteils S₋ abhängige Fehlerrate darstellt. Die (suboptimale) Abtastung mit dem Schwellenwert L2 reagiert schneller mit einer nachweisbaren Veränderung der Fehlerrate auf Änderungen der Signalqualität als die (optimale) Abtastung mit dem Schwellenwert L1. Je kleiner die Fehlerrate, repräsentiert durch das Signal Y₋, desto besser ist die Signalqualität des elektrischen Signalanteils S₋. Eine kleine Fehlerrate bedeutet aber auch, daß der in Fig. 1 gezeigte optische Polarisationssteller 1.7 durch die Steuersignale P1, P2 gut eingestellt ist. Ändert sich die Polarisation des optischen Signals kann der optische Polarisationssteller 1.7 adaptiv durch Variation der Steuersignale P1, P2 und durch Minimierung der Fehlerrate (Y₋) nachgeführt werden. Die Auswertung der von den Mehrstufenentscheidern kommenden Signale Z₋, Z₊, Y₋, Y₊ und die Erzeugung des Qualitätssignals Q erfolgt durch die Regeleinrichtung 2.5.

In Fig. 4 ist ein weiteres Ausführungsbeispiel einer Entzerrerschaltung 4.9 gezeigt, deren Einund Ausgänge die gleichen Bezugszeichen wie die in Fig. 1 gezeigte Entzerrerschaltung 1.2 haben. Die Entzerrerschaltung 4.9 hat zwei Verzögerungseinrichtungen 4.1, 4.2, zwei Bewertungseinrichtungen 4.3, 4.4, einen Addierer 4.5, einen Mehrstufenentscheider 4.6 und eine Regeleinrichtung 4.7. Wie bereits in Zusammenhang mit Fig. 2 erläutert, kann auch hier der Mehrstufenentscheider 4.6 u. U. entfallen. Durch die Verzögerungseinrichtungen 4.1, 4.2 werden die elektrischen Signalanteile S₋, S₊ zeitlich aneinander angepaßt. Daran anschließend wird der elektrische Signalanteil S₋ durch die Bewertungseinrichtung 4.3 mit dem Bewertungsfaktor K1 bewertet und einem Eingang des Addierers 4.5 zugeführt, und der elektrische Signalanteil S₊ wird durch die Bewertungseinrichtung 4.4 mit dem Bewertungsfaktor K2 bewertet und einem weiteren Eingang des Addierers 4.5 zugeführt. Die Bewertungseinrichtungen 4.3, 4.4 sind üblicherweise elektrisch einstellbare Verstärker oder Dämpfungsglieder. Nach der Addition wird das Summensignal dem Mehrstufenentscheider 4.6 zugeführt, der prinzipiell die gleiche Struktur und Funktionsweise wie der in Fig. 3 gezeigte Mehrstufenentscheider 2.1 hat, so daß an dieser Stelle auf eine detaillierte Beschreibung verzichtet wird. Aus dem Mehrstufenentscheider 4.6 tritt das Datensignal D und ein die Fehlerrate repräsentierendes Signal Q_{K} aus, das der Regeleinrichtung 4.7 zugeführt wird. Ausgehend von dem Signal Q_{K} erzeugt die Regeleinrichtung 4.7 die variablen Bewertungsfaktoren K1, K2, die variablen Steuersignale für die Verzögerungseinrichtungen 4.1, 4.2 und das Qualitätssignal Q.

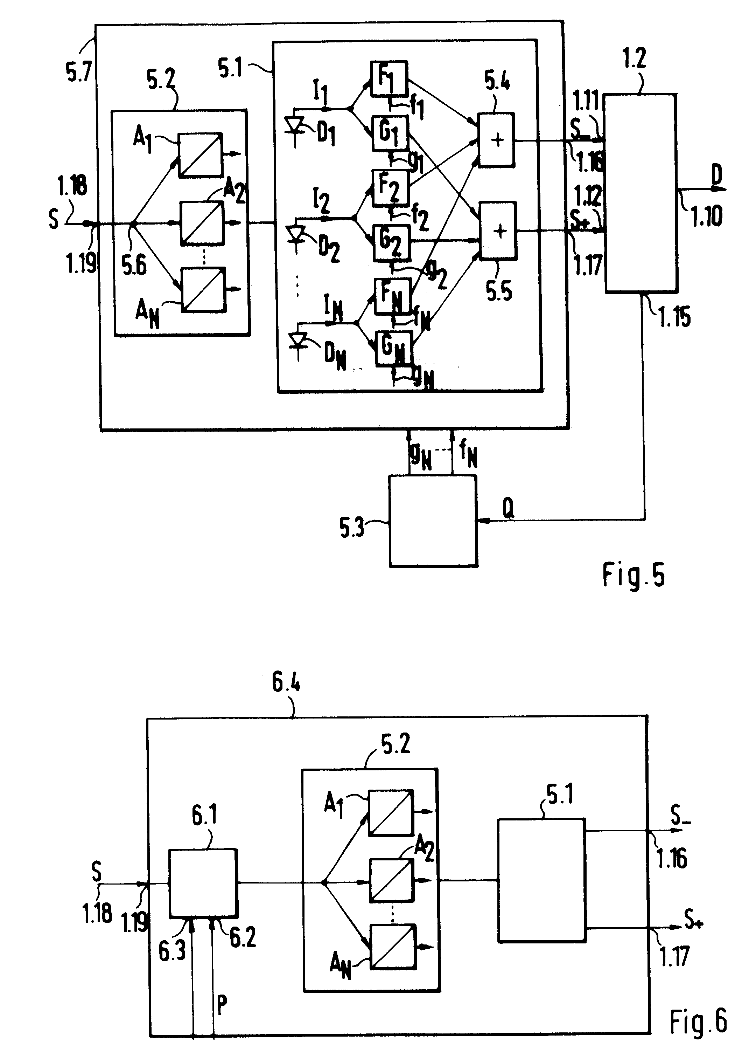

In Fig. 5 ist ein zweites Ausführungsbeispiel eines optischen Empfängers gezeigt, der die gleiche Struktur wie der in Fig. 1 gezeigte optische Empfänger hat. Unterschiedlich zu dem ersten Ausführungsbeispiel ist, daß die Aufteileinrichtung 5.7 einen anderen inneren Aufbau als die Aufteileinrichtung 1.1 (Fig. 1 ) hat und die Steuereinrichtung 5.3 andere Steuersignale f_{N}, g_{N} als die Steuereinrichtung 1.3 (Fig. 1) liefert. In Fig. 5 sind für die Einund Ausgänge 1.16, 1.17, 1.19 der Aufteileinrichtung 5.7 die gleichen Bezugszeichen wie in Fig. 1 verwendet; gleiche Bezugszeichen hat auch die ebenfalls vorhandene Entzerrerschaltung 1.2.

Die Aufteileinrichtung 5.7 hat eine Anordnung 5.2 von N optischen Polarisatoren A₁, A₂, A_{N} und eine elektrooptische Einheit 5.1. Das vom Eingang 1.19 kommende optische Signal S wird durch einen Splitter 5.6 gleichmäßig aufgeteilt und den optischen Polarisatoren A₁, A₂, A_{N} zugeführt. Die optischen Polarisatoren A₁, A₂, A_{N} haben feste, aber voneinander unterschiedliche Polarisationseigenschaften, d. h. abhängig von den momentanen Polarisationszuständen des optischen Signals S lassen sie jeweils mehr oder weniger Licht durch.

Der Anordnung 5.2 ist die elektrooptische Einheit 5.1 nachgeschaltet, in der Photodioden D₁, D₂, D_{N}, 2 x N Bewertungseinrichtungen F₁, G₁ bis F_{N}, G_{N} und zwei Addierer 5.4, 5.5 vorhanden sind. Jedem der optischen Polarisatoren A₁, A₂, A_{N} ist eine der Photodioden D₁, D₂, D_{N} zugeordnet, die einen der optischen Leistung proportionalen Photostrom l₁, l₂, I_{N} erzeugen. Der Photostrom l₁ wird geteilt: ein Teil wird durch die Bewertungseinrichtung F₁ mit einem Faktor f₁ bewertet und ein Teil wird durch die Bewertungseinrichtung G₁ mit einem Faktor g₁ bewertet. Eine entsprechende Bewertung erfolgt auch für die Ströme l₂, l_{N}. Die Bewertungseinrichtungen F₁, G₁ bis F_{N}, G_{N} sind so ausgestaltet, daß auch eine Vorzeichenumkehr der Photoströme l₁, l₂, I_{N} möglich ist, um so auch eine Subtraktion vornehmen zu können.

Der Addierer 5.4 addiert alle von den Bewertungseinrichtungen F₁, F₂, F_{N} kommenden Signale und bildet daraus den elektrischen Signalanteil S₋, der am Ausgang 1.16 aus der Aufteileinrichtung 1.1 austritt. Der Addierer 5.5 addiert alle von den Bewertungseinrichtungen G₁, G₂, G_{N} kommenden Signale und bildet daraus den elektrischen Signalanteil S₊, der am Ausgang 1.17 aus der Aufteileinrichtung 1.1 austritt.

Ausgehend von dem Qualtitätssignal Q (siehe Beschreibung zu Fig. 2) bestimmt die Steuereinrichtung 5.3 die Faktoren f₁ bis f_{N}, g₁ bis g_{N}, die den Bewertungseinrichtungen F₁, F₂, F_{N} als Steuersignale zugeführt werden.

Vorteilhaft an diesem Ausführungsbeispiel eines optischen Empfängers ist, daß keine regelbaren optischen Komponenten (Polarisationssteller) erforderlich sind. Notwendige Regelungen werden ausschließlich im elektrischen Teil des optischen Verstärkers vorgenommen.

Die im vorhergehenden beschriebenen Konzepte zur Aufteilung des optischen Signals S in zwei elektrische Signalanteile S₋, S₊ können auch kombiniert werden. Ein Ausführungsbeispiel einer sich aus der Kombination ergebenden Aufteileinrichtung 6.4 ist in Fig. 6 gezeigt. Die Aufteileinrichtung 6.4 besteht aus einem optischen Polarisationssteller oder Polarisationsschalter 6.1, der bereits in Fig. 5 gezeigten Anordnung 5.2 von N optischen Polarisatoren A₁, A₂, A_{N} und der ebenfalls bereits in Fig. 5 gezeigten elektrooptischen Einheit 5.1. Der Polarisationsschalter 6.1 kann z. B. als Faser ausgeführt sein, die durch Piezo-Elemente definiert gepreßt werden kann. Gesteuert wird der Polarisationsschalter 6.1 durch zwei oder mehrere Steuersignale P, die z. B. von der Steuereinrichtung 1.3 erzeugt werden. Die elektrischen Signalanteile S₋, S₊ werden daran anschließend z. B. durch die Entzerrerschaltung 1.2 (Fig. 1) weiterverarbeitet.

## Patentansprüche

1. Optischer Empfänger, bei dem eine Aufteileinrichtung (1.1, 5.7, 6.4) vorhanden ist, die ein ihr zuführbares optisches Signal (S) in zwei elektrische Signalanteile (S₋, S₊) aufteilt, bei dem der erste elektrische Signalanteil (S₋) an einem ersten Ausgang (1.16) und der zweite elektrische Signalanteil (S₊) an einem zweiten Ausgang (1.17) der Aufteileinrichtung (1.1, 5.7, 6.4) austreten, bei dem die elektrischen Signalanteile (S₋, S₊) einer Entzerrerschaltung (1.2, 4.9) zuführbar sind, die die elektrischen Signalanteile (S₋, S₊) verarbeitet und ein daraus abgeleitetes Datensignal (D) an einem Ausgang (1.10) ausgibt, und bei dem eine Steuereinrichtung (1.3, 5.3) vorhanden ist, die die Aufteileinrichtung (1.1) mit Hilfe eines von der Entzerrerschaltung (1.2, 4.9) erzeugten Qualitätssignals (Q) steuert.

2. Optischer Empfänger nach Anspruch 1, bei dem die Aufteileinrichtung (1.1) aus einem steuerbaren optischen Polarisationssteller (1.7), der die Polarisation des optischen Signals (S) beeinflussen kann, einem optischen Teiler (1.6), der das vom optischen Polarisationssteller (1.7) kommende optische Signal (S) aufteilt und zwei optischen Polarisatoren (1.4, 1.5) zuführt, die das optische Signal (S) in zwei orthogonal polarisierte Anteile aufteilen, und zwei Photodioden (1.8, 1.9) besteht, die von den optischen Polarisatoren (1.4, 1.5) kommendes Licht in die elektrischen Signalanteile (S₋, S₊) wandeln.

3. Optischer Empfänger nach Anspruch 1, bei dem die Aufteileinrichtung (1.1) aus einem steuerbaren optischen Polarisationssteller (1.7), der die Polarisation des optischen Signals (S) beeinflussen kann, einem optischen Polarisator, der das vom optischen Polarisationssteller (1.7) kommende optische Signal (S) in zwei orthogonal polarisierte Anteile aufteilt, und zwei Photodioden (1.8, 1.9) besteht, die vom optischen Polarisator kommendes Licht in die elektrischen Signalanteile (S₋, S₊) wandeln.

4. Optischer Empfänger nach Anspruch 1, bei dem die Aufteileinrichtung (5.7) aus einer Anordnung (5.2) von optischen Polarisatoren (A₁, A₂, A_{N}) und einer elektrooptischen Einheit (5.1) besteht, in der Photodioden (D₁, D₂, D_{N}), erste und zweite Bewertungseinrichtungen (F₁, F₂, F_{N}, G₁, G₂, G_{N}) und zwei Addierer (5.4, 5.5) vorhanden sind, bei dem die optischen Polarisatoren (A₁, A₂, A_{N}), denen das optische Signal (S) zuführbar ist, festgelegte Polarisationseigenschaften haben, bei dem jedem optischen Polarisator (A₁, A₂, A_{N}) eine Photodiode (D₁, D₂, D_{N}) zugeordnet ist, die einen Photostrom (l₁, l₂, l_{N}) erzeugt, der auf eine erste und eine zweite Bewertungseinrichtung (F₁, F₂, F_{N}, G₁, G₂, G_{N}) aufteilbar ist, bei dem der erste Addierer (5.4) die von den ersten Bewertungseinrichtung (F₁, F₂, F_{N}) kommenden Photoströme (l₁, l₂, I_{N}) addiert, um daraus den ersten elektrischen Signalanteil (S₋) zu bilden, und bei dem der zweite Addierer (5.5) die von den zweiten Bewertungseinrichtungen (G₁, G₂, G_{N}) kommenden Photoströme (l₁, l₂, l_{N}) addiert, um daraus den zweiten elektrischen Signalanteil (S₊) zu bilden.

5. Optischer Empfänger nach Anspruch 1, bei dem die Aufteileinrichtung (6.4) aus einem steuerbaren optischen Polarisationssteller oder Polarisationsschalter (6.1), der die Polarisation des optischen Signals (S) beeinflussen kann, einer Anordnung (5.2) von optischen Polarisatoren (A₁, A₂, A_{N}), der das von dem steuerbaren optischen Polarisationssteller oder Polarisationsschalter (6.1) kommende optische Signal (S) zuführbar ist, und einer elektrooptischen Einheit (5.1) besteht, in der Photodioden (D₁, D₂, D_{N}), erste und zweite Bewertungseinrichtungen (F₁, F₂, F_{N}, G₁, G₂, G_{N}) und zwei Addierer (5.4, 5.5) vorhanden sind, bei dem die optischen Polarisatoren (A₁, A₂, A_{N}) festgelegte Polarisationseigenschaften haben, bei dem jedem optischen Polarisator (A₁, A₂, A_{N}) eine Photodiode (D₁, D₂, D_{N}) zugeordnet ist, die einen Photostrom (l₁, l₂, I_{N}) erzeugt, der auf eine erste und eine zweite Bewertungseinrichtung (F₁, F₂, F_{N}, G₁, G₂, G_{N}) aufteilbar ist, bei dem der erste Addierer (5.4) die von den ersten Bewertungseinrichtung (F₁, F₂, F_{N}) kommenden Photoströme (l₁, l₂, I_{N}) addiert, um daraus den ersten elektrischen Signalanteil (S₋) zu bilden, und bei dem der zweite Addierer (5.5) die von den zweiten Bewertungseinrichtungen (G₁, G₂, G_{N}) kommenden Photoströme (l₁, l₂, I_{N}) addiert, um daraus den zweiten elektrischen Signalanteil (S₊) zu bilden.

6. Optischer Empfänger nach Anspruch 5, bei dem die Steuereinrichtung (5.3) aus dem ihr zuführbaren Qualitätssignal (Q) Bewertungsfaktoren (g_{N}, f_{N}) ableitet, durch die die Bewertungseinrichtungen (F₁, F₂, F_{N}, G₁, G₂, G_{N}) steuerbar sind.

7. Optischer Empfänger nach einem der Ansprüche 1 bis 4, bei dem die Entzerrerschaltung (1.2) zwei Mehrstufenentscheider (2.1, 2.6), zwei Verzögerungseinrichtungen (2.2, 2.4), einen Schalter (2.3) und eine Regeleinrichtung (2.5) hat, bei dem der erste elektrische Signalanteil (S₋) dem ersten Mehrstufenentscheider (2.1) zuführbar ist, der daraus ein erstes und zweites Signal (Z₋, Y₋) ableitet, bei dem das erste Signal (Z₋) der ersten Verzögerungseinrichtung (2.2) und der Regeleinrichtung (2.5) zuführbar ist, der außerdem das zweite Signal (Y₋) zuführbar ist, bei dem der zweite elektrische Signalanteil (S₊) dem zweiten Mehrstufenentscheider (2.6) zuführbar ist, der daraus ein drittes und viertes Signal (Z₊, Y₊) ableitet, bei dem das dritte Signal (Z₊) der zweiten Verzögerungseinrichtung (2.4) und der Regeleinrichtung (2.5) zuführbar ist, der außerdem das vierte Signal (Y₊) zuführbar ist, bei dem die Regeleinrichtung (2.5) aus den ihr zuführbaren abgeleiteten Signalen (Y₋, Y₊, Z₋, Z₊) das Qualitätssignal (Q) und Steuersignale für die beiden Verzögerungseinrichtungen (2.2, 2.4) und den Schalter (2.3) ableitet.

8. Optischer Empfänger nach einem der Ansprüche 1 bis 4, bei dem die Entzerrerschaltung (4.9) zwei Verzögerungseinrichtungen (4.1, 4.2), zwei Bewertungseinrichtungen (4.3, 4.4), einen Addierer (4.5), einen Mehrstufenentscheider (4.6) und eine Regeleinrichtung (4.7) hat, bei dem der erste elektrische Signalanteil (S₋) der ersten Verzögerungseinrichtung (4.1) zuführbar ist, die ihn verzögern kann und der ersten Bewertungseinrichtung (4.3) weiterleitet, die den ersten Signalanteil (S₋) mit einem ersten Bewertungsfaktor (K1) bewertet und einem Eingang des Addierers (4.5) zuführt, bei dem der zweite elektrische Signalanteil (S₊) der zweiten Verzögerungseinrichtung (4.2) zuführbar ist, die ihn verzögern kann und der zweiten Bewertungseinrichtung (4.4) weiterleitet, die den zweiten Signalanteil (S₊) mit einem zweiten Bewertungsfaktor (K2) bewertet und einem weiteren Eingang des Addierers (4.5) zuführt, bei dem ein von dem Addierer (4.5) gebildetes Summensignal dem Mehrstufenentscheider (4.6) zuführbar ist, der daraus das Datensignal (D) und ein für die Regeleinrichtung (4.7) bestimmtes Signal (Q_{K}) erzeugt, und bei dem die Regeleinrichtung (4.7) das Qualitätssignal (Q) und Steuersignale für die beiden Verzögerungseinrichtungen (4.1, 4.2) und die beiden Bewertungseinrichtungen (4.3, 4.4) erzeugt, durch die die Verzögerungen der Verzögerungseinrichtungen (4.1, 4.2) und die Bewertungsfaktoren (K1, K2) festlegbar sind.

9. System zur optischen Übertragung eines optischen Signals (S) über ein Lichtwellenleiternetz, mit einem optischen Sender auf der Sendeseite des Systems und mit einem optischen Empfänger auf der Empfangsseite,
dadurch gekennzeichnet,
daß der optische Empfänger eine Aufteileinrichtung (1.1, 5.7, 6.4) hat, die das ihr zuführbare optische Signal (S) in zwei elektrische Signalanteile (S₋, S₊) aufteilt, daß der erste elektrische Signalanteil (S₋) an einem ersten Ausgang (1.16) und der zweite elektrische Signalanteil (S₊) an einem zweiten Ausgang (1.17) der Aufteileinrichtung (1.1, 5.7, 6.4) austreten, daß die elektrischen Signalanteile (S₋, S₊) einer im optischen Empfänger vorhandenen Entzerrerschaltung (1.2, 4.9) zuführbar sind, die die elektrischen Signalanteile (S₋, S₊) verarbeitet und ein daraus abgeleitetes Datensignal (D) an einem Ausgang (1.10) ausgibt, und daß der optische Empfänger eine Steuereinrichtung (1.3, 5.3) hat, die die Aufteileinrichtung (1.1) mit Hilfe eines von der Entzerrerschaltung (1.2, 4.9) erzeugten Qualitätssignals (Q) steuert.
